# DEMANDE DE BREVET EUROPEEN

(11) **EP 4 198 489 A1**
(43) Date de publication de la demande: **21.06.2023**
(21) Numéro de dépôt: 22212200.4
(22) Date de dépôt: 08.12.2022
(51) Int. Cl.: G01N 5/02, G01N 29/02, G01N 15/06, G01N 29/036, G01N 15/00

(54) **DISPOSITIF DE DÉTECTION DE MOLÉCULES DE SILOXANES VOLATILS**

(30) Priorité: 15.12.2021 FR 2113602
(71) Demandeur: Centre National d'Études Spatiales, 75039 Paris Cedex 01 (FR); Centre National de la Recherche Scientifique, 75016 Paris (FR); Université de Montpellier, 34090 Montpellier (FR); Ecole Nationale Superieure de Chimie de Montpellier - ENSCM, 34090 Montpellier (FR)
(72) Inventeur: RIOLAND, Guillaume, 31400 Toulouse (FR); IACOMI, Paul, 34070 Montpellier (FR); DEVAUTOUR-VINOT, Sabine, 34730 Prades le Lez (FR); GULCAY, Ezgi, 34000 Montpellier (FR); MAURIN, Guillaume, 34090 Montpellier (FR)
(74) Mandataire: Germain Maureau

(57) **Abrégé**

Dispositif de détection (100) pour la détection de siloxanes volatils, le dispositif de détection (100) comprenant :
- un matériau poreux adsorbant configuré pour adsorber et désorber des molécules de siloxanes volatils,
- un appareil de détection électronique (1) configuré pour émettre un signal de sortie électronique en continu, le signal de sortie électronique étant modifié lors de l'adsorption et la désorption de siloxanes volatils par le matériau poreux adsorbant,
- une unité de traitement (3) configurée pour recevoir et traiter les variations du signal de sortie électronique.

## Description

La présente invention se rapporte au domaine de la détection des composés organiques volatils, et notamment à un dispositif de détection de molécules de siloxanes volatils. Selon un deuxième aspect, la présente invention concerne également un procédé de détection de siloxanes volatils mettant en oeuvre ce dispositif de détection.

Les poly-siloxanes, ou silicones, constituent un groupe de polymères couramment utilisés, notamment dans la formulation de divers adhésifs, élastomères et plastiques. Ils sont constitués d'un squelette silicium-oxygène comportant un groupe radical de type alkyle ou phényle relié aux atomes de silicium.

Malgré leur excellente résistance thermique et chimique, dans certaines conditions les silicones subissent une dégradation, comme lors d'échauffement d'équipements à haute température, sous une exposition combinée aux rayonnements ionisants et au vide poussé. Le mécanisme de dégradation décompose le polymère en chaînes de plus petites tailles, conduisant à des sous-produits volatils linéaires (Lx) ou cycliques (Dx) tels que l'octaméthyltrisiloxane (L3) ou l'octaméthylcyclotétrasiloxane (D4 ), illustrés ci-dessous par les formules 1 et 2 .

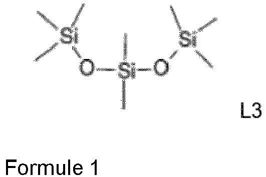

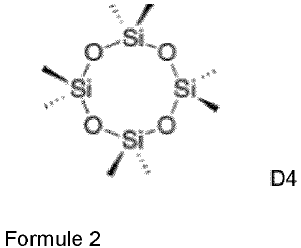

Ces sous-produits de dégradation posent un problème pour les instruments sensibles, l'environnement et la santé humaine. Leur adsorption sur les surfaces perturbe l'électronique et les équipements, tandis qu'un échauffement supplémentaire conduit à leur décomposition en dépôts de silice (SiO₂) mécaniquement abrasifs. En termes d'impact environnemental, les méthylsiloxanes volatils sont classés comme substances hautement préoccupantes par le règlement REACH de l'Union européenne en raison de leur nature persistante et bio-accumulative.

Il est ainsi nécessaire de surveiller la concentration de siloxanes volatils en suspension dans l'air. Selon les environnements considérés, leur concentration est très variable, allant de quelque ng m⁻³ (< 1 ppb) dans le cas des espaces ouverts, plusieurs µg/m³ (0.01-10 ppm) dans le cas des constructions intérieures et des bâtiments recevant du public, à plusieurs mg/m³ (plusieurs centaines des ppm) dans le cas des flux de biogaz. Dans le domaine spatial, il existe également un besoin de détection en ligne, spécifique des contaminants siloxanes résultant du dégazage des polymères utilisés dans la fabrication des satellites, aussi bien au niveau de la salle blanche (surveillance du dégazage initial) qu'au lancement et en exploitation.

Toutefois, les méthodes de détection actuellement existantes ne sont pas suffisantes pour la surveillance en continu allant du niveau du ppb et jusqu'au niveau du ppm. Un des buts de la présente invention vise à pallier au moins l'un des inconvénients précités. A cet effet, la présente invention propose un dispositif de détection pour la détection de siloxanes volatils, le dispositif de détection comprenant :
- un matériau poreux adsorbant configuré pour adsorber et désorber des molécules de siloxanes volatils,
- un appareil de détection électronique configuré pour émettre un signal de sortie électronique en continu, le signal de sortie électronique étant modifié lors de l'adsorption et de la désorption des siloxanes volatils par le matériau poreux adsorbant,
- une unité de traitement configurée pour recevoir et traiter les variations du signal de sortie électronique.

Ainsi configuré, le dispositif de détection de la présente invention permet la quantification précise et en temps réel des siloxanes volatils, molécules qui se retrouvent sous forme de traces de contaminants, i.e. du ppb à quelques dizaines de ppm, dans des domaines tels que la construction et la rénovation domiciliaire et dans le domaine spatial. L'unité de traitement est bien entendu configurée pour émettre au moins une information relative à une adsorption ou une désorption de siloxanes volatils.

Notons que la problématique visée par la présente invention diffère totalement de celle du piégeage de molécules organiques volatiles en vue de la décontamination des environnements. Dans ce dernier cas, les concentrations de ces molécules peuvent être très élevées et leur piégeage nécessite des substrats adsorbants aux volume poreux et surface spécifique très importants. Par ailleurs, ces matériaux poreux doivent présenter des interactions ou affinités très élevées avec les molécules à absorber, pour s'assurer que le contaminant demeure piégé dans la porosité de l'adsorbant. Par conséquent, les conditions de régénération de ces dispositifs sont en général drastiques car la désorption des molécules ayant de fortes affinités avec le substrat est coûteuse en énergie.

Selon une disposition de la présente invention, l'enthalpie d'adsorption de siloxanes volatils dans le matériau poreux adsorbant est comprise entre environ 80 et 120 kJ.mol^{- 1} de sorte à présenter des propriétés d'adsorption et de désorption réversibles de siloxanes volatils. Cette plage de valeurs d'enthalpie d'adsorption a été simulée numériquement à partir de calculs Monte Carlo à base de champs de force dans des conditions de dilution infinie et évaluée expérimentalement (chaleur isostérique) par l'application de la loi de Clausius Clapeyron à partir d'au moins deux isothermes d'adsorption obtenues par mesures d'adsorption gravimétriques ou volumétriques, selon la procédure bien connue de l'homme du métier et décrite dans : Rouquerol, J., Rouquerol, F., Llewellyn, P. L., Maurin, G. & Sing, K. Adsorption by powders and porous solids: principles, methodology and applications. (Academic Press, 2013).

Par désorption réversible, on entend une désorption 'naturelle', sans traitement, notamment thermique, des siloxanes dans le matériau poreux. Le traitement de désorption est justement ce que vise à éviter l'invention pour diminuer les couts et travailler à distance, notamment dans le domaine spatial.

En effet, plus l'enthalpie d'adsorption entre le matériau poreux adsorbant et le siloxane est élevée, plus l'affinité chimique est importante pour le couple matériau poreux adsorbant/siloxane et plus le seuil d'adsorption est bas. Ceci permet une sélectivité préférentielle de l'adsorption vis-à-vis des siloxanes volatils couplée à une détection de siloxanes jusqu'à de très faibles concentrations, allant de l'échelle de quelques dizaines de ppm à quelques dizaines de ppb. Par ailleurs, l'enthalpie d'adsorption est limitée à 120 kJ mol⁻¹ de sorte à permettre un mécanisme d'adsorption/désorption totalement réversible, et quasi-total des siloxanes volatils dans les conditions d'utilisation. Ceci est notamment corroboré dans Wang, G., Zhang, Z. & Hao, Z. Recent advances in technologies for the removal of volatile methylsiloxanes: A case in biogas purification process. Critical Reviews in Environmental Science and Technology vol. 49 2257-2313 (2019). Ainsi, la réponse du matériau en mode adsorption et désorption demeure identique ce qui permet de s'affranchir de toute historique du matériau. Le dispositif ainsi configuré permet de s'assurer d'un processus *in situ* de sorption, i.e. adsorption et désorption, du matériau en équilibre avec son environnement, quelle que soit la concentration en siloxanes volatils dans l'atmosphère ambiante. Ces caractéristiques évitent la nécessité de traitements de désorption du dispositif de détection, classiquement réalisés par traitement thermique sous vide lors de l'utilisation de dispositifs d'adsorption qui visent à décontaminer l'atmosphère d'une grande quantité de molécules volatiles, et non de détecter la présence de siloxanes volatils à une échelle comprise entre le ppb et la dizaine de ppm. Ceci facilite grandement l'utilisation du dispositif de détection sur le long terme et à distance.

Selon une possibilité, l'enthalpie d'adsorption en siloxanes volatils par le matériau poreux adsorbant est comprise entre environ 80 et 120 kJ mol-1 de sorte à présenter des propriétés d'adsorption et de désorption réversibles des siloxanes volatils.

Selon un mode de réalisation, le matériau poreux adsorbant présente une taille d'accessibilité au réseau poreux supérieure ou égale à 6 Angströms, de sorte à permettre l'adsorption de siloxanes volatils parmi les siloxanes volatils D1 à D4 et L2 à L4 dans les pores du matériau poreux adsorbant. Cette condition permet d'atteindre une cinétique d'adsorption rapide, par exemple de quelques secondes grâce à un transport rapide des molécules dans les pores du matériau adsorbant, ce qui garantit à l'appareil de détection électronique de réaliser une mesure dont le signal illustre une détection liée à l'apparition d'au moins un siloxane volatil dans l'environnement ambiant en temps réel.

Lorsque le matériau poreux adsorbant présente une taille de pores de 7 Angströms ou plus, il est également possible d'adsorber des siloxanes volatils de tailles plus importantes, notamment les siloxanes D5, D6 et L5 à L6. Selon la taille du siloxane volatil à détecter, il est en effet possible de sélectionner un matériau poreux adsorbant en fonction de la taille de ses pores en plus de son enthalpie d'adsorption vis-à-vis de cette molécule.

Selon une possibilité, le matériau poreux adsorbant est un matériau hybride poreux de type MOF ou une combinaison de plusieurs MOFs. Une combinaison de plusieurs MOFs permettant avantageusement de détecter plusieurs types de molécules de siloxanes volatils.

Ce matériau appartient à la famille des hybrides poreux également connu sous l'acronyme anglo-saxon MOF pour Metal Organic Framework. Cette famille de matériaux poreux cristallins est constituée d'ions métalliques coordonnés à des ligands organiques, et sont chimiquement stables, ce qui est d'un intérêt crucial pour une utilisation à long terme dans le dispositif de détection selon l'invention.

Selon un mode de réalisation, le matériau poreux adsorbant est un MOF choisi parmi des MOFs à base de Zr, tel que le PCN-777, le MOF-808-formate, le MOF-808-acetate, le Zr6-AzoBDC et le NU-1100, des MOFs à base de Zn, tels que le IRMOF-76, le DUT-11, le MOF-177, le ZIF-70, le MOF à base de Cr, MIL-101 et le MOF à base de Ti, MIL-125. Dans le cas du MIL-101(Cr), considéré à titre d'exemple, la partie inorganique est constituée d'unités de construction à base de trimères formés par des octaèdres d'oxydes de chrome interconnectés par ponts µ3-O. Ces trimères métalliques sont reliés entre eux par des ligands organiques bidendates, dans ce cas à base d'entités téréphtalates, issues de l'acide benzène-1,4-dicarboxylique. L'ensemble résulte en un réseau tri-demensionnel de topologie mtn-e, de nom commun MIL-101(Cr). Le réseau poreux ainsi formé présente une distribution bimodale des pores, avec des cages mésoporeuses de l'ordre de ~29 Å et ~34 Å de diamètre, interconnectées par des fenêtres pentagonales et hexagonales de 12 Å et 16 Å d'envergure. Divers fournisseurs délivrent ce type de matériau selon des procédés de fabrication propres, parmi lesquels on peut citer Materials Center (Allemagne), Novomof (Suisse) ou MOF Technologies (Royaume-Unis).

Selon une disposition, l'appareil de détection électronique est configuré pour émettre un signal de sortie électronique capable d'évoluer en temps réel lors de l'adsorption ou de la désorption de siloxanes volatils. L'unité de traitement est configurée pour émettre au moins une information de quantité de siloxanes volatils adsorbés ou désorbés, à partir de la variation du signal de sortie électronique. Il est entendu que la quantité peut varier entre 0 et qq dizaines de ppm.

En effet, la quantité adsorbée peut augmenter ou diminuer au cours du temps dans une phase respectivement d'adsorption ou de désorption du matériau poreux adsorbant, ce qui traduit respectivement une augmentation ou une diminution de la teneur en siloxanes volatils dans l'environnement ambiant.

Selon une possibilité, l'appareil de détection électronique est un transducteur électromécanique, notamment une microbalance piézoélectrique, configuré de sorte que le signal de sortie électronique est modifié lorsque la masse du matériau poreux adsorbant varie lors de l'adsorption/désorption de siloxanes volatils. L'adsorption et la désorption d'un siloxane volatil entraîne une modification du signal de sortie électronique du transducteur électromécanique. Ce dernier combine avantageusement une limite de détection correspondant à des concentrations en siloxanes volatils dans l'environnement très basses, en rapport avec le seuil d'adsorption du matériau poreux, et une très forte sensibilité de détection, en lien avec le facteur de qualité du cristal piezoélectrique. *In fine,* ce transducteur électromécanique présente une limite de détection de l'ordre quelques dizaines de ppb et une sensibilité de détection d'une variation de masse à l'échelle de 10 ng/cm². La variation du signal de sortie électronique est proportionnelle à la variation de la quantité de siloxanes volatils adsorbés/désorbés.

Autrement dit, le transducteur électromécanique consiste en une unité de détection de variation de masse par unité de surface et dont une surface est recouverte par un matériau poreux adsorbant, le transducteur électromécanique étant configuré de sorte à détecter une variation de masse du film de matériau poreux adsorbant et générer une réponse mesurable, proportionnelle à la variation de masse.

Selon une possibilité, le transducteur électromécanique est constitué par une microbalance à quartz, bien connue sous l'acronyme anglo-saxon QCM (pour Quartz Crystal Microbalance), permettant une détection d'adsorption/désorption d'un siloxane volatil en temps réel. La détection consiste en la mesure du décalage de la fréquence de résonance de cet oscillateur mécanique. Ce décalage de fréquence est lié à la masse de siloxanes volatils adsorbés par le matériau poreux adsorbant à la surface du quartz, avec une sensibilité de détection correspondant à de très faibles concentrations en siloxanes volatils dans l'environnement, soit de l'ordre de quelques dizaines de ppb, pour un QCM d'une fréquence nominale de 10 MHz et électrodes en Au/Ti.

L'unité de traitement peut comprendre dans ce cas un circuit connecté au QCM. Cette unité fournit le courant alternatif d'entraînement et elle est configurée pour mesurer la fréquence de résonnance du QCM et en déduire le décalage de la fréquence de résonnance, proportionnel à la variation de masse du matériau poreux adsorbant, qui est elle-même proportionnelle à la quantité de siloxanes volatils adsorbés/désorbés par le matériau poreux selon la teneur en siloxanes volatils dans l'environnement ambiant.

Selon une variante de réalisation, l'appareil de détection électronique est un transducteur capacitif ou résistif, configuré de sorte que le signal de sortie électronique est modifié lorsque la capacitance ou la résistance de matériau poreux adsorbant varie lors de l'adsorption/désorption de siloxanes volatils selon la teneur en siloxanes volatils dans l'environnement ambiant.

Par exemple, le transducteur est un réseau d'électrodes métalliques en forme de peignes qui s'entrecroisent, résultant ainsi en un réseau inter-digité, bien connu sous l'acronyme anglo-saxon IDE (pour InterDigitated Electrode), support sur lequel est déposé le matériau poreux adsorbant, dont les propriétés capacitives et/ou résistives varient en fonction de la quantité de siloxanes volatils adsorbés/désorbés par le matériau poreux selon la teneur en siloxanes volatils dans l'environnement ambiant.

L'unité de traitement comprend dans ce cas un circuit connecté à l'IDE et elle est configurée pour mesurer les variations des propriétés électriques, ces variations étant proportionnelles à la quantité de siloxanes volatils absorbés ou désorbés par le matériau poreux absorbant.

Selon une disposition, le matériau poreux adsorbant est déposé sous forme de film mince sur l'appareil de détection électronique. Ceci permet d'obtenir un dispositif de détection qui tient dans un boitier compact.

La surface du transducteur électromécanique QCM ou IDE est directement en contact avec le film mince du matériau poreux adsorbant.

Selon une possibilité, le film mince déposé présente une épaisseur inférieure à un millimètre.

Selon une disposition, le film de matériau poreux adsorbant présente une épaisseur de quelques centaines de nm.

Selon une possibilité, le matériau poreux adsorbant est configuré pour adsorber ou désorber des molécules de siloxanes volatils à la même température.

Selon une disposition, le matériau poreux adsorbant est configuré pour adsorber ou désorber des molécules de siloxane volatiles sans traitement de régénération.

Selon une possibilité, le dispositif de détection est configuré pour détecter des teneurs de molécules de siloxanes volatils à l'échelle des ppb, notamment une teneur comprise entre environ 0,1 ppb et 10 ppm de siloxanes volatils. Selon un mode de réalisation, le dispositif de détection comprend:
- un matériau poreux adsorbant configuré pour adsorber et désorber des molécules de siloxanes volatils, le matériau poreux adsorbant étant constitué d'un MOF ou d'une combinaison de MOFs,
- un appareil de détection électronique configuré pour émettre un signal de sortie électronique en continu, le signal de sortie électronique étant modifié lors de l'adsorption et la désorption de siloxanes volatils par le matériau poreux adsorbant,
- une unité de traitement configurée pour recevoir et traiter les variations du signal de sortie électronique.

Selon un deuxième aspect, la présente invention propose également un procédé de détection de siloxanes volatils comprenant les étapes suivantes :
a) fourniture d'un dispositif de détection (100) selon l'une des revendications précédentes,
b) adsorption ou désorption de siloxanes volatils par le matériau poreux adsorbant,
c) variation du signal de sortie électronique émis par l'appareil de détection électronique,
d) réception et traitement de la variation du signal de sortie électronique en continu par l'unité de traitement.

Selon une disposition, l'unité de traitement émet au moins une information d'adsorption ou de désorption de siloxanes volatils.

Selon une possibilité, l'unité de traitement émet au moins une information de quantité de siloxanes volatils adsorbés ou désorbés.

Selon une disposition, l'étape b) d'adsorption de siloxanes volatils par le matériau poreux adsorbant est réalisée à la même température que la désorption.

Selon une disposition, le procédé est dépourvu de traitement de régénération du matériau adsorbant.

Selon une disposition, le procédé est dépourvu de traitement thermique de désorption. En effet, la désorption est naturelle.

Selon une disposition, l'étape b) d'adsorption de siloxanes volatils par le matériau poreux adsorbant est réalisée dans les mêmes conditions de température et de pression que la désorption.

Selon une possibilité, l'étape b) d'adsorption ou de désorption de siloxanes volatils par le matériau poreux adsorbant est naturelle. Un équilibre se produit naturellement entre les siloxanes volatils présents dans l'environnement de mesure et les siloxanes volatils adsorbés.

Selon une possibilité le procédé de détection est réalisé dans un environnement placé dans l'espace.

La détection est réalisée en continu, sans interruption nécessitée par la désorption du siloxane. Si un traitement de désorption devait être réalisé comme c'est le cas dans les dispositifs connus à ce jour, la détection des siloxanes volatils serait interrompue pendant la durée de ce traitement. Ceci est évité par la présente invention.

Selon une possibilité, le procédé de détection est réalisé dans un environnement comprenant au plus 10 ppm de siloxanes volatils.

D'autres caractéristiques et avantages apparaitront à la lecture de la description détaillée ci-après de deux exemples non limitatifs de mise en oeuvre, faite en référence aux figures annexées dans lesquelles :
La Figure 1 représente une vue schématique et une section transversale d'un dispositif de détection dans lequel l'appareil de détection électronique est un QCM selon un mode de réalisation de l'invention.
La Figure 2 représente une vue schématique et une section transversale d'un dispositif de détection dans lequel l'appareil de détection électronique est un IDE selon un mode de réalisation de l'invention.
La Figure 3 illustre la variation de la fréquence de résonance du QCM, selon le dispositif de détection du premier mode de réalisation de l'invention, en fonction de la concentration en siloxanes volatils dans l'environnement.
La Figure 4 illustre la rapidité avec laquelle le dispositif de détection du premier mode de réalisation de l'invention répond selon diverses concentrations en siloxanes volatils dans l'environnement.
La Figure 5 illustre la linéarité de la réponse de détection avec la concentration en siloxanes volatils dans l'environnement, en modes adsorption et désorption, dans le dispositif de détection du premier mode de réalisation de l'invention.

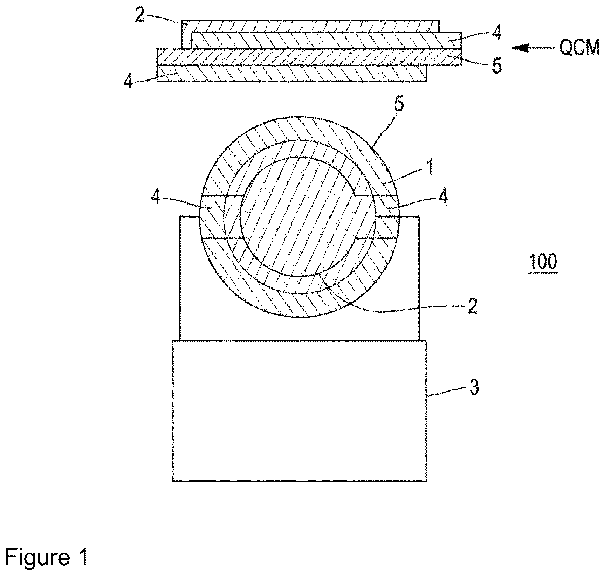

Comme illustré sur la figure 1, le dispositif de détection 100 de la présente invention comprend un appareil de détection électronique 1 constitué par un transducteur électromécanique, en particulier une microbalance à quartz QCM (fréquence nominale 10MHz avec électrodes 4 Au/Ti) capable de mesurer de très petites variations de masse, de l'ordre de quelques nano-grammes à quelques microgrammes, sur lequel un film mince 2 d'un matériau poreux adsorbant est déposé. Le dispositif 100 comprend également une unité de traitement 3 reliée à l'appareil de détection 1 par un circuit électrique. L'unité de traitement 3, est configurée pour appliquer un champ électrique de fréquence variable aux électrodes 4 du QCM, pour mesurer le signal de sortie électronique en temps réel du transducteur 1, à savoir la fréquence de résonance du cristal de quartz 5, et traiter le décalage de la fréquence de résonance qui apparaît lors de l'adsorption comme de la désorption du matériau poreux adsorbant. L'unité de traitement 3 est également configurée pour émettre au moins une information de l'adsorption (ou désorption) d'un siloxane volatil, qui sera reçue par un utilisateur (non illustré) ou un dispositif de traitement automatique de l'information qui prendra les mesures nécessaires, tel qu'un nettoyage des optiques soumis à la pollution du siloxane volatil ou l'application d'un correctif d'erreur sur les valeurs enregistrées par des appareils de mesures disposés dans cet environnement.

Selon une caractéristique non illustrée, l'au moins une information émise par l'unité de traitement 3 comprend la quantité de siloxanes volatils adsorbés par le matériau poreux adsorbant 2.

Le matériau poreux adsorbant 2 déposé sur l'appareil de détection électronique 1 est choisi parmi les matériaux MOFs et notamment le MIL-101(Cr) disponible auprès de la société Materials Center. Ce dernier présente une enthalpie d'adsorption du siloxane volatil octaméthylcyclotétrasiloxane (D4) de l'ordre de 96 kJ.mol⁻¹ et des cages poreuses dont le diamètre d'accès est supérieur à 6 Å, permettant au D4 d'accéder à l'intégralité de la porosité. Le MIL-101 (Cr) peut également être synthétisé, par exemple en conditions hydrothermales, à partir d'un mélange équimolaire de nitrate de chrome (Aldricht, 99%), d'acide fluorhydrique, d'acide de benzène-1,4-dicarboxylique (Aldricht, 99%), introduit en milieu aqueux et placé dans un autoclave pendant 8h à 200°C. L'échange de l'eau par de l'éthanol est ensuite réalisé par plusieurs cycles d'échange après centrifugation et re-dispersion, afin d'obtenir une suspension stable dans le temps avec une concentration en nanoparticules de MIL-101 (Cr) d'environ 30g/L. Environ 15 µL de cette suspension sont déposés sur le cristal de quartz 5 du QCM présentant une surface d'environ 1 cm de diamètre par dépôt à la tournette autrement appelé par enduction centrifuge, procédé bien connu par l'homme de l'art sous l'expression anglo-saxonne de 'spin coating'. Une vitesse de rotation du support de 2000 tr/min permet l'obtention du film mince 2 de MIL-101 (Cr) qui est homogène et adhère bien à la surface du QCM et dont l'épaisseur est d'environ 5 µm.

Selon d'autres possibilités non illustrées sur les figures, le film mince 2 est formé par dépôt par exemple par la coulée par goutte ou drop-casting en langue anglo-saxonne, par immersion, par la méthode Langmuir-Blodgett ou par croissance épitaxiale *in situ.*

Selon encore d'autres possibilités non illustrées, d'autres MOF que le MIL-101 (Cr) présentant une enthalpie d'adsorption comprise entre 80 et 120 kJ.mol⁻¹ avec le siloxane volatil, peuvent être utilisés. C'est le cas du PCN-777(Zr), le MOF-808-formate(Zr), le MOF-808-acetate(Zr), le Zr6-AzoBDC, le NU-1100(Zr), le IRMOF-76(Zn), le DUT-11(Zn), le MOF-177(Zn), le ZIF-70(Zn), et le MIL-125(Ti).

La plage d'enthalpie d'adsorption considérée est suffisante pour permettre une adsorption mais elle reste suffisamment faible pour permettre une réversibilité totale du phénomène, selon la concentration en siloxanes volatils dans l'environnement ambiant. Aussi, le dispositif de détection 100 est parfaitement configuré pour émettre la même information que ce soit au cours de l'adsorption ou de la désorption de siloxanes volatils.

Selon d'autres variantes non visibles sur les figures, l'invention s'applique également à la détection des siloxanes volatils D1 à D3 et L1 à L4 avec tous les matériaux poreux adsorbant cités ci-dessus.

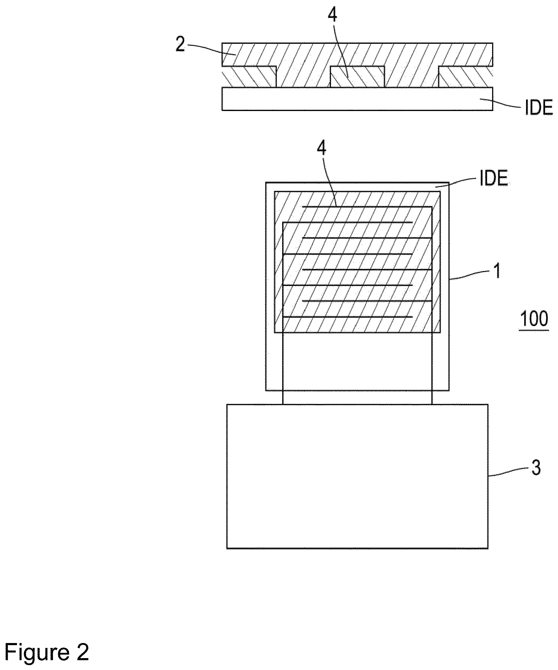

La figure 2 illustre un deuxième mode de réalisation de l'invention qui diffère du premier mode en ce que l'appareil de détection électronique 1 est un IDE sur lequel un film mince 2 d'un matériau poreux adsorbant, parmi ceux précédemment cités, est déposé. Il s'ensuit que l'IDE émet un signal de sortie électronique variant avec la capacitance ou la résistance du matériau poreux adsorbant 2 déposé selon les mêmes procédés que ceux sus-cités, de façon à combler à minima l'espace entre chaque électrode inter-digitée 4, la variation de la capacitance ou de la résistance du matériau poreux adsorbant 2 résultant de ses propriétés d'adsorption/désorption du siloxane volatil présent dans l'environnement.

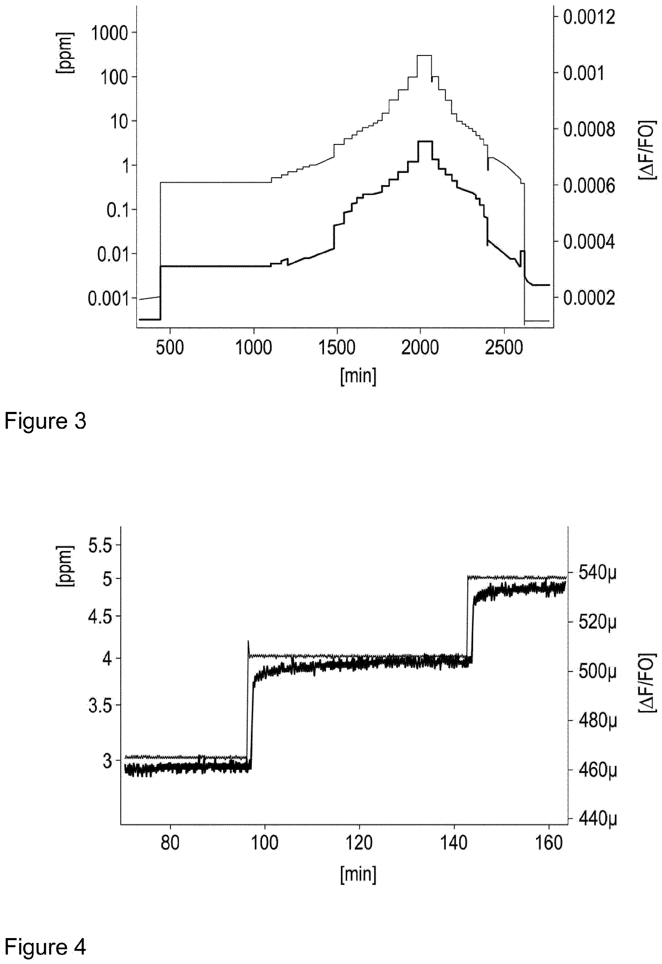

Les figures suivantes 3 à 5 illustrent le fonctionnement du dispositif de détection 100 selon le premier mode de réalisation de la présente invention utilisant un QCM mis en situation. Le traitement du signal de sortie électronique de l'appareil de détection 1 permet d'illustrer qu'un décalage de la fréquence de résonance est bien observé en fonction de la concentration en siloxane volatil D4 dans l'environnement, jusqu'à des concentrations de quelques dizaines de ppb. La figure 3 illustre notamment le décalage de la fréquence de résonance du QCM par la courbe inférieure (se référer à l'echelle de droite sur l'axe des ordonnées) montrant la variation du signal ΔF / F0, où ΔF représente la fréquence mesurée - fréquence F0, et F0 représente la fréquence du signal de référence, en fonction du temps (axe des abscisses) sous l'effet de la variation de la concentration en siloxane volatil D4 dans l'environnement, illustrée par la courbe du haut (échelle de gauche).

La figure 4 illustre le temps de réponse (courbe inférieure) du dispositif de détection 100 face à des changements extrêmement rapides de la concentration en siloxane volatil D4 dans l'environnement (courbe supérieure). Pour les deux variations brutales de la concentration en D4 (passage de 3 à 4 ppm à environ 100 min et passage de 4 à environ 5 ppm à environ 140 min), un délai de l'ordre d'une minute seulement est nécessaire au dispositif 100 de l'invention pour la détection de ces variations.

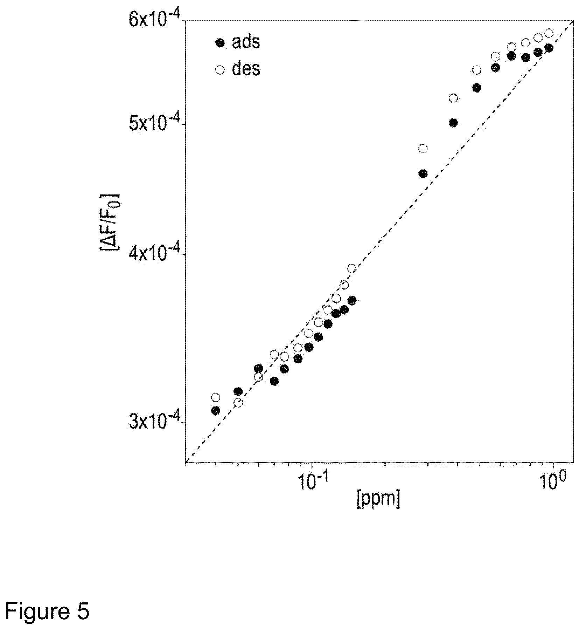

La figure 5 illustre la bonne linéarité de la détection du dispositif 100 selon l'invention pour une variation de la concentration C en siloxane volatil D4 dans l'environnement entre 40 ppb et 1 ppm. Aussi, ces courbes illustrent l'excellente sensibilité du dispositif 100 avec d(ΔF/F₀)/d(C) = 2.73×10⁻⁴ ppm⁻¹.

Notons que ces caractéristiques sont semblables dans le cas de l'utilisation du matériau poreux adsorbant 2 en mode d'adsorption (points illustrés par des disques pleins) et de désorption (points illustrés par des cercles).

Bien que cela ne ressorte pas des figures 1 à 4, l'unité centrale 3 est également configurée pour émettre au moins une information d'adsorption ou de désorption de siloxanes volatils lorsque, par exemple, le signal de sortie électronique de l'appareil de détection électronique 1 diffère du signal de sortie électronique de référence (en l'absence de siloxanes adsorbés).

Ainsi, la présente invention propose un dispositif de détection 100 simple à mettre en oeuvre utilisant un film mince 2 d'un matériau hybride poreux MOF pour la détection des siloxanes volatils. Les matériaux poreux de type MOFs apportent plusieurs avantages : I) leur capacité à former des films facilite leur dépôt sur les supports servant d'appareils de détection électronique (QCM, IDE), II) la nature régulière de leurs pores combinée à la modulation contrôlée de la taille/forme des pores et de la fonctionnalité chimique de leurs parois permet d'envisager des enthalpies d'adsorption de siloxanes volatils favorables à la détection sélective des siloxanes volatils et permet la discrimination entre différents types de contaminants, III) leurs grands volumes poreux potentiels permettent une capacité d'adsorption élevée du contaminant cible pour une détection avec une très haute sensibilité. La haute sélectivité (II)/sensibilité (III) combinée des MOFs et la réponse rapide et fiable inhérente à la technologie des appareils 1 QCM/IDE offrent des valeurs ajoutées remarquables par rapport aux systèmes conventionnels. Enfin, la nature solide et compacte du dispositif 100 se traduit par un faible encombrement et une intégration facile à tout système de surveillance en ligne de siloxanes volatils à température ambiante.

Il va de soi que l'invention n'est pas limitée aux variantes de réalisation décrites ci-dessus à titre d'exemple mais qu'elle comprend tous les équivalents techniques et les variantes des moyens décrits ainsi que leurs combinaisons.

## Revendications

1. Dispositif de détection (100) pour la détection de siloxanes volatils, le dispositif de détection (100) comprenant :
- un matériau poreux adsorbant configuré pour adsorber et désorber des molécules de siloxanes volatils,
- un appareil de détection électronique (1) configuré pour émettre un signal de sortie électronique en continu, le signal de sortie électronique étant modifié lors de l'adsorption et la désorption de siloxanes volatils par le matériau poreux adsorbant,
- une unité de traitement (3) configurée pour recevoir et traiter les variations du signal de sortie électronique.

2. Dispositif de détection (100) selon la revendication 1, dans lequel l'enthalpie d'adsorption de siloxanes volatils dans le matériau poreux adsorbant est comprise entre environ 80 et 120 kJ mol⁻¹ de sorte à présenter des propriétés d'adsorption et de désorption réversibles des siloxanes volatils.

3. Dispositif de détection (100) selon l'une des revendications 1 à 2, dans lequel le matériau poreux adsorbant présente une taille d'accessibilité au réseau poreux supérieure ou égale à 6 Angströms, de sorte à permettre l'adsorption de siloxanes volatils parmi les siloxanes volatils D1 à D4 et L2 à L4 dans les pores du matériau poreux adsorbant.

4. Dispositif de détection (100) selon l'une des revendications 1 à 3, dans lequel le matériau poreux adsorbant est un matériau hybride poreux de type MOF ou une combinaison de plusieurs MOFs.

5. Dispositif de détection (100) selon l'une des revendications 1 à 4, dans lequel le matériau poreux adsorbant est un MOF choisi parmi des MOFs à base de Zr, tel que le PCN-777, le MOF-808-formate, le MOF-808-acetate, le Zr6-AzoBDC et le NU-1100, des MOFs à base de Zn, tel que le IRMOF-76, le DUT-11, le MOF-177, le ZIF-70, le MOF à base de Cr: MIL-101 et le MOF à base de Ti: MIL-125.

6. Dispositif de détection (100) selon l'une des revendications 1 à 5, dans lequel l'appareil de détection électronique (1) est un transducteur électromécanique configuré de sorte que le signal de sortie électronique est modifié lorsque la masse du matériau poreux adsorbant varie lors de l'adsorption et de la désorption de siloxanes volatils.

7. Dispositif de détection (100) de siloxanes volatils selon la revendication 6, dans lequel le transducteur électromécanique est constitué par une microbalance à quartz (QCM).

8. Dispositif de détection (100) selon l'une des revendications 1 à 7, dans lequel le matériau poreux adsorbant est déposé sous forme de film mince (2) sur l'appareil de détection électronique (1).

9. Dispositif de détection (100) selon l'une des revendications 1 à 8, dans lequel l'unité de traitement (3) est configurée pour indiquer au moins une information de quantité de siloxanes volatils adsorbés ou désorbés, à partir de la variation du signal de sortie électronique.

10. Procédé de détection de siloxanes volatils comprenant les étapes suivantes :
a) fourniture d'un dispositif de détection (100) selon l'une des revendications précédentes,
b) adsorption ou désorption de siloxanes volatils par le matériau poreux adsorbant,
c) variation du signal de sortie électronique émis par l'appareil de détection électronique (1),
d) réception et traitement de la variation du signal de sortie électronique en continu par l'unité de traitement (3).
